(19) Europäisches Patentamt
European Patent Office
Office européen des brevets

(11) Veröffentlichungsnummer: **0 048 385**
**B1**

(12) **EUROPÄISCHE PATENTSCHRIFT**

(45) Veröffentlichungstag der Patentschrift: **18.12.85**

(51) Int. Cl.⁴: **F 24 D 11/02**, F 24 J 3/00, F 24 J 2/34, F 24 D 11/00

(21) Anmeldenummer: **81107046.5**

(22) Anmeldetag: **08.09.81**

# (54) Verfahren zur Beheizung von Gebäuden mittels eines Wärmepumpenprozesses.

(30) Priorität: **20.09.80 DE 3035538**

(43) Veröffentlichungstag der Anmeldung: **31.03.82 Patentblatt 82/13**

(45) Bekanntmachung des Hinweises auf die Patenterteilung: **18.12.85 Patentblatt 85/51**

(84) Benannte Vertragsstaaten: **AT BE CH DE FR GB IT LI LU NL SE**

(56) Entgegenhaltungen:
**EP-A-0 002 839**
**DE-A-2 336 667**
**DE-A-2 620 133**
**DE-A-2 744 618**
**DE-A-2 909 321**
**DE-A-2 916 530**
**US-A-4 164 933**

**Die Akte enthält technische Angaben, die nach dem Eingang der Anmeldung eingereicht wurden und die nicht in dieser Patentschrift enthalten sind.**

(73) Patentinhaber: **Seemann, Karl, Hammerhalde 62, D-7730 Villingen-Schwellingen (DE)**
Patentinhaber: **Seemann, Bernhard, Oberf.-Ganter-Strasse 14, D-7730 Villingen-Schwellingen (DE)**

(72) Erfinder: **Seemann, Karl, Hammerhalde 62, D-7730 Villingen-Schwellingen (DE)**
Erfinder: **Seemann, Bernhard, Oberf.-Ganter-Strasse 14, D-7730 Villingen-Schwellingen (DE)**

(74) Vertreter: **Patentanwälte Dipl.-Ing. Klaus Westphal Dr. rer. nat. Bernd Mussgnug Dr. rer.nat. Otto Buchner, Waldstrasse 33, D-7730 VS-Villingen (DE)**

EP 0 048 385 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Beheizung von Gebäuden mittels eines Wärmepumpenprozesses, wie dieses im Oberbegriff des Anspruchs angegeben ist.

Charakteristisch für nach dem Wärmepumpenprozess arbeitende Systeme ist, dass mittels eines Absorbers der Umwelt, z. B. der Aussenluft, Wärme entzogen wird, die gespeichert werden kann und dem innerhalb des Gebäudes installierten Heizkreis eines Niedertemperaturheizsystems zugeführt wird. Zwischen Absorber- bzw. Speicherkreis und Heizkreis ist eine – z. B. elektrisch betriebene – Wärmepunpe angeordnet, welche das Temperaturniveau der der Umwelt entzogenen Wärmeenergie auf ein Temperaturniveau anhebt, das eine Raumbeheizung oder auch Warmwasserbereitung ermöglicht.

Eine derartige Anordnung ist z. B. aus der DE-A-2 336 667 bekannt. Nach dieser Druckschrift sind zweischalige Wandelemente vorgesehen, in deren Aussenschale zur Bildung der Absorber und in deren Innenschale zur Bildung einer Flächenheizung Rohrschlangen eingebettet sind.

Diese Konstruktionen haben einen energetisch ungünstigen Aufbau. Ausserdem werden damit die thermisch günstigen Eigenschaften des Betons nur wenig oder zum Teil auch gar nicht genutzt.

Zwischen der abgekühlten Aussen- und erwärmten Innenschale besteht bei derartigen Konstruktionen ein relativ grosses treibendes Temperaturgefälle. Unter Wirkung dieses Temperaturgefälles stellt sich im Wandquerschnitt ein grosser Wärmestrom ein, der den Wärmepumpenkreis zusätzlich belastet und damit die Wirtschaftlichkeit des Systems verschlechtert.

Weiterhin werden bei den beschriebenen Konstruktionen die internen Wärmespeichermöglichkeiten nicht genutzt bzw. nicht gezielt eingesetzt.

Nach dem gleichen Verfahren arbeitet die Gebäudeheizung nach der EP-A-0002 839. Zusätzlich sind bei dieser Heizungsanlage im Erdreich befindliche Bauteile mit in diese eingebetteten Rohrschlangen vorgesehen, welche mit der Verdampferseite der Wärme verbindbar sind. Mit diesen als Wärmetauscher arbeitenden Bauteilen soll zusätzlich dem Erdreich Wärme entzogen, also die Erdwärme nutzbar gemacht werden.

Die vorliegende Erfindung geht von einem an sich sehr ähnlichen Verfahren aus, dient jedoch der Lösung einer anders gelagerten Aufgabe.

Das Hauptproblem bei der Beheizung von Gebäuden mittels der Umweltwärme besteht vor allem in der Wärmespeicherung. Einerseits ist zur Beheizung des Gebäudes in den Morgenstunden eine rasche Aufnahme und Abgabe der Wärme notwendig, wofür ein Absorber mit geringer Wärmeträgheit erforderlich ist. Andererseits sind in Zeiten höheren Energieangebotes und geringeren Wärmeverbrauchs Absorber mit höherer Speicherkapazität erforderlich, um einen hohen Anteil der angebotenen Umweltenergie auszunutzen. Bei Überangebot von Wärme ist ein grösserer Speicher zur Langzeitspeicherung nötig, der zwangsläufig eine grössere Wärmeträgheit besitzt.

Der Erfindung liegt die Aufgabe zugrunde, das bekannte Verfahren so weiterzuentwickeln, dass die geschilderten Verfahrensbedingungen möglichst optimal erfüllt werden, so dass die Heizwärme aus der angebotenen Umweltwärme mit höherem Wirkungsgrad gewonnen werden kann.

Gelöst wird diese Aufgabe durch gezielte und gesteuerte Nutzung der zwischengespeicherten Wärme, wie dies im Kennzeichen des Anspruchs angegeben ist.

Das erfindungsgemässe Verfahren zur Beheizung von Gebäuden mittels eines Wärmepumpenprozesses ist nachstehend anhand von Prinzipschaltbildern, mit welchen der Aufbau und die verschiedenen Betriebssituationen veranschaulicht werden, ausführlich im einzelnen erläutert. Auf eine detaillierte Darstellung und Beschreibung der einzelnen Baugruppen kann verzichtet werden, da diese bekannt sind.

In den Zeichnungen zeigen:

Fig. 1 Prinzipschaltbild zur Veranschaulichung des Systems,

Fig. 2 bis Fig. 6 detaillierte Darstellung der erfindungsgemäss arbeitenden Anordnung für verschiedene Betriebssituationen, nämlich

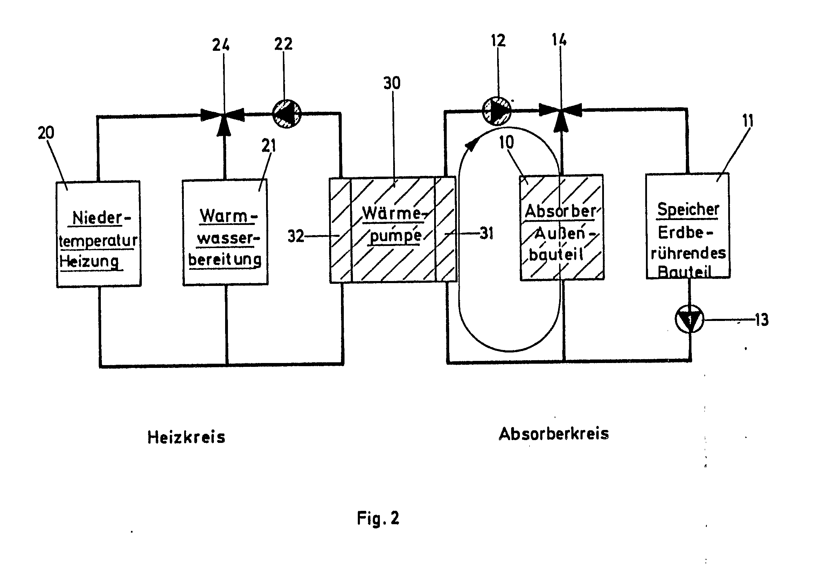

Fig. 2 Absorberbetrieb über Aussenbauteile

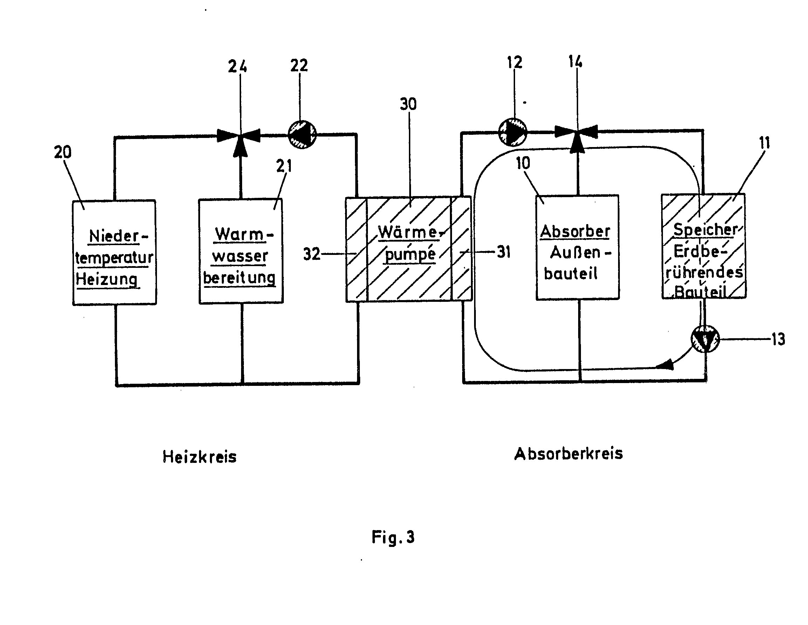

Fig. 3 Absorberbetrieb über Speicher-Bauteile

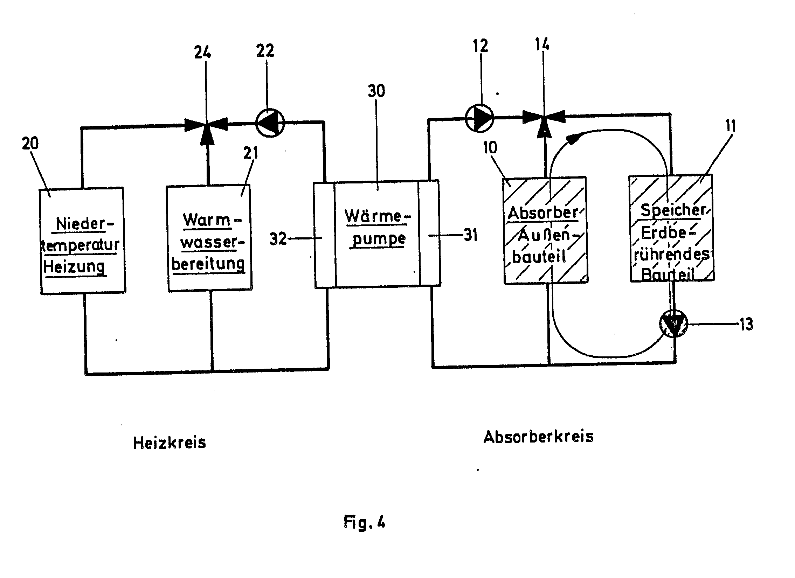

Fig. 4 Wärmespeicherung in Speicherbauteilen

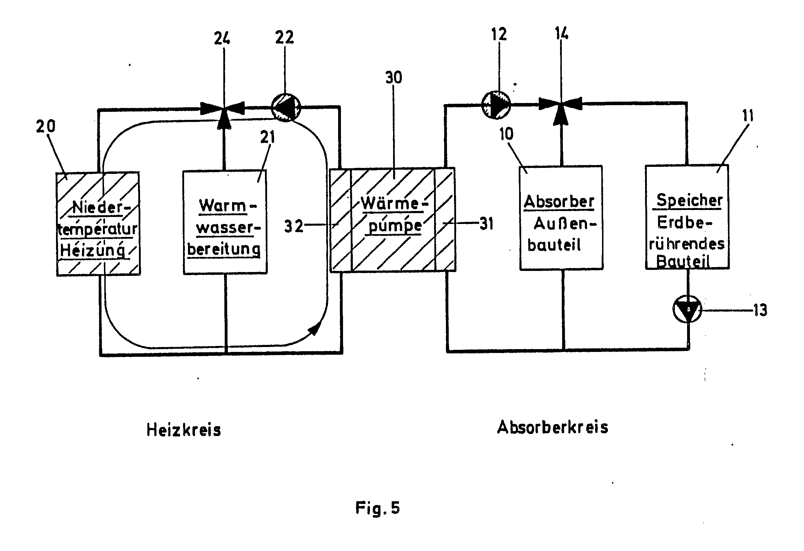

Fig. 5 Wärmeabgabe über Niedertemperaturheizung

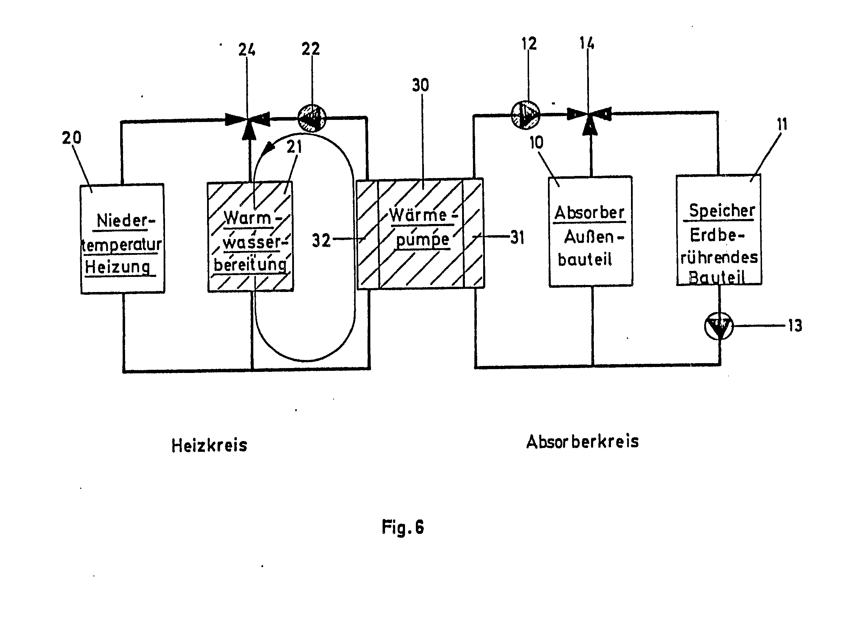

Fig. 6 Wärmeabgabe zur Warmwasserbereitung.

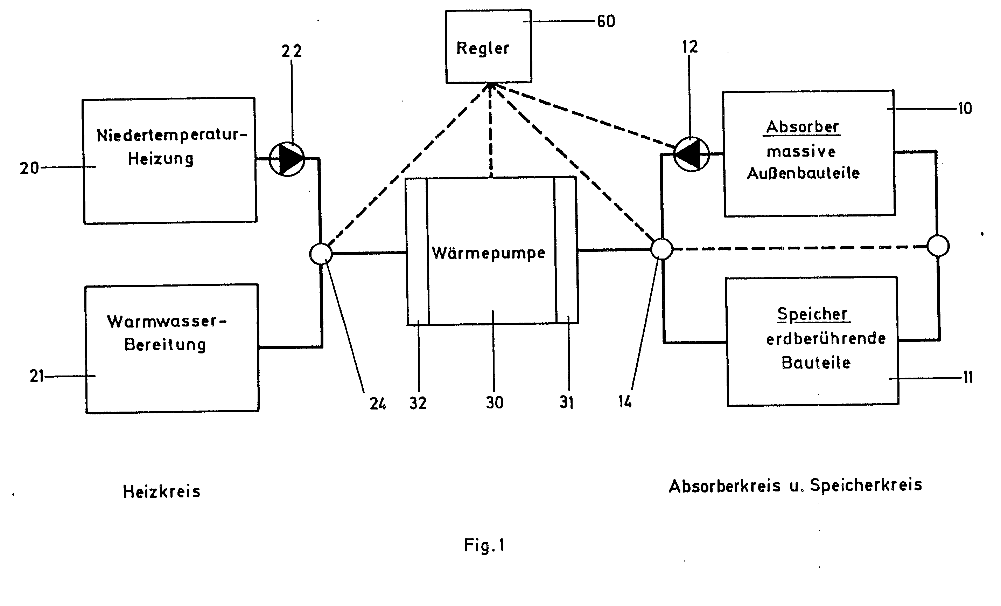

Wie die Prinzipdarstellung gem. Fig. 1 erkennen lässt, setzt sich die erfindungsgemäss arbeitende Anordnung oder Anlage aus einem Absorber- und Speicherkreis zur Aufnahme und Speicherung der Wärmeenergie aus der Umwelt und einem Heizkreis in Form einer Niedertemperaturheizung 20 beliebiger Art und einer Anlage zur Warmwasserbereitung 21 zusammen, wobei die Wärmeübertragung von Absorber- und Speicherkreis zum Heizkreis mittels einer Wärmepumpe 30 erfolgt.

Die verschiedenen Betriebszustände der Anlage werden mittels eines Reglers 60 gesteuert, in welchem Messdaten verarbeitet werden, die dem Wärmeangebot und -bedarf, also vor allem den Temperaturen von Umluft, der Wärmeträger innerhalb der Absorber- und Speicherkreise, der Heizkreise bzw. Warmwasseraggregate entsprechen. Je nach den erforderlichen und zweckmässigen Betriebszuständen werden in Abhängigkeit von diesen Daten Regel- und Steuerbefehle erzeugt, welche den Umwälzpumpen 12, 13 im Absorber- und Speicherkreis bzw. 22 im Heizkreis sowie den Steuerventilen 14 im Absorber- und Speicherkreis bzw. 24, im Heizkreis zugeleitet werden.

Die verschiedenen Schaltzustände zur Raumheizung bzw. Warmwasserbereitung sind mittels der Blockschaltbilder in den Fig. 2 bis 6 veranschaulicht.

Die jeweils aktivierten Baugruppen sind schraffiert dargestellt, wobei die Strömungskreisläufe mit eingetragenen Ringpfeilen angedeutet sind.

Fig. 2 veranschaulicht, wie beim sogenannten Absorberbetrieb mittels der Aussenbauteile 10 die mit der Aussenatmosphäre in Kontakt stehenden Massiv-Absorber Wärme aus der Umwelt aufnehmen, wobei der Luft, Niederschlägen u. Tauwasser Wärme entzogen wird und die Sonneneinstrahlung entsprechend den Absorptions- und Emissionseigenschaften der Oberfläche genutzt wird. Das Dreiwegventil 14 ist so gesteuert, dass die Wärmeträgerflüssigkeit, transportiert von der Umwälzpumpe 12, zirkuliert und der Verdampferseite 31 der Wärmepumpe 30 Wärme zuführt. Die Wärmepumpe 30 bringt die zugeführte Wärmemenge in bekannter Weise auf ein höheres Temperaturniveau und gibt diese an der Kondensatorseite 32 an die der Raumheizung bzw. Warmwasserbereitung dienenden Kreise 20, 21 ab. Bei dieser Betriebsweise sind die erdberührenden Speicherbauteile abgeschaltet.

Bei einem Überangebot an Wärmeenergie aus der Umwelt kann die vom Absorber-Aussenbauteil 10 aufgenommene Energie im erdberührenden Speicherbauteil 11 gespeichert werden. Zu diesem Zweck sind die Kreisläufe von Absorber- und Speicherbauteilen über das 3-Wegeventil 14 Reihe geschaltet, wobei die Umwälzpumpe 13 für den Strömungsumlauf sorgt. Die Wärmepumpe 30 und Umwälzpumpe 12 sind hierbei abgeschaltet. (vergl. Fig. 4)

Bei einem hohen Energiebedarf für die Gebäudebeheizung und geringem Energieangebot aus der Umwelt wird, wie mit Fig. 3 veranschaulicht ist, der Kreislauf des Massiv-Speichers 11 über das entsprechend angesteuerte 3-Wegeventile 14 mit der Verdampferseite 31 der Wärmepumpe 30 verbunden, wobei die Umwälzpumpe 12 für die Aufrechterhaltung der Strömung sorgt. Das Ventil 14 ist so geschaltet, dass der Absorberzweig mit den massiven Absorberbauteilen 10 abgetrennt ist.

Die verschiedenen Möglichkeiten der Wärmeübertragung sind mit den Blockschaltbildern gem. Fig. 5 und 6 veranschaulicht, wobei der Absorberkreis wahlweise gem. Fig. 2 oder 4 geschaltet sein kann.

Nach der Darstellung gem. Fig. 5 ist der Heizungskreislauf mit seinen symbolisch angedeuteten Wärmespendern 20 u. 21 über das Dreiwegeventil 24 und die eingeschaltete Umwälzpumpe 22 mit der Kondensatorseite 32 der in Betrieb befindlichen Wärmepumpe 30 verbunden. Die auf ein höheres Temperaturniveau angehobene Wärmeenergie wird über Heizkörper beliebiger Art der Niedertemperaturheizung 20 an den zu beheizenden Raum abgegeben.

Haben die zu beheizenden Räume die vorbestimmte Temperatur erlangt, so wird das Ventil 24 so geschaltet, dass nur noch der Zweig 21 zur Warmwasserbereitung über das Ventil 24 und die Umwälzpumpe 22 mit der Kondensatorseite 32 der Wärmepumpe verbunden ist, wie dies mit Fig. 6 symbolisiert ist. Ein Boiler zur Warmwasserbereitung wird zu solchen Zeiten beheizt, in welchen das Energieangebot aus der Umwelt eine möglichst wirtschaftliche Aufheizung gestattet und der Energiebedarf zur Raumbeheizung, z.B. bei starker direkter Beheizung der Räume durch Sonneneinstrahlung, gering geworden ist.

**Patentanspruch**

Verfahren zur Beheizung von Gebäuden mittels eines Wärmepumpenprozesses, nach dem die Wärme der Umgebung mit im Freien befindlichen Bauteilen (10) entzogen, mit denselben Bauteilen kurzzeitig zwischengespeichert und über eine Wärmepumpe (30) einem Heizkreis zugeführt wird und wobei ein Wärmetauschersystem mit im Erdreich befindlichen Bauteilen (11) mit der Verdampferseite (31) der Wärmepumpe verbindbar ist, dadurch gekennzeichnet, dass die zwischengespeicherte Wärme von einem in Abhängigkeit vom Wärmebedarf und -angebot selbsttätig gesteuerten Regler (60) wahlweise der Verdampferseite (31) der Wärmepumpe (30) oder dem als Langzeitspeicher (11) wirkenden Wärmetauschersystem zugeführt wird, das bei geringem Angebot von Umgebungswärme über den Regler selbsttätig mit der Verdampferseite (31) der Wärmepumpe (30) verbunden wird.

**Claim**

A method of heating buildings by means of a heat pump process, in which heat is removed from the surroundings by building parts (10) which are located in the open, is temporarily stored for a short period by the same building parts and is fed via a heat pump (30) to a heating circuit, and wherein a heat exchanger system including building parts (11) located in the ground can be connected to the vaporizer side (31) of the heat pump, characterised in that the temporarily stored heat is fed selectively, by means of a regulator (60) which is automatically controlled as a function of the heat requirement and heat availability, to the vaporizer side (31) of the heat pump (30) or to the heat exchanger system which acts as a long-term store (11) and which, in the case of low availability of heat from the surroundings, is automatically connected via the regulator to the vaporizer side (31) of the heat pump (30).

**Revendication**

Procédé pour chauffer des bâtiments selon un processus mettant en œuvre une pompe à chaleur, procédé dans lequel la chaleur de l'environnement ext extraite à l'aide de parties constitutives (10) se trouvant à l'air libre, puis est emmagasinée de façon intermédiaire pendant un court laps de temps à l'aide de ses mêmes parties constitutives, et ensuite amenée par l'intermédiaire d'une pompe à chaleur (30) à un circuit de chauffage, un système d'échangeur thermique avec des parties constitutives (11) se trouvant dans le sol étant susceptible d'être relié au côté évaporateur (31) de la pompe à chaleur, procédé caractérisé en ce que la chaleur emmagasinée de façon intermédiaire est amenée par un régulateur (60), commandé automatiquement en fonction des besoins et des disponibilités en chaleur, soit au côté évaporateur (31) de la pompe à chaleur (30) ou bien au système d'échangeur thermique jouant le rôle d'accumulateur (11) de la chaleur pendant une longue durée, et qui, dans le cas où les disponibilités en chaleur de l'environnement sont réduites, est relié automatiquement par l'intermédiaire du régulateur au côté évaporateur (31) de la pompe à chaleur (30).

10
Absorber
massive
Außenbauteile
11
Speicher
erdberührende
Bauteile
12
14
60
Regler
Wärmepumpe
31
30
32
24
22
Niedertemperatur-
Heizung
Warmwasser-
Bereitung
20
21
Absorberkreis u. Speicherkreis
Heizkreis

Fig.1

11
13
Speicher
Erdbe-
rührendes
Bauteil
14
12
10
Absorber-
Außen-
bauteil
31
Absorberkreis
30
Wärme-
pumpe
32
22
21
24
Warm-
wasser-
bereitung
Nieder-
temperatur
Heizung
20
Heizkreis

Fig. 2

11
13
Speicher
Erdbe-
rührendes
Bauteil
Absorber
Außen-
bauteil
14
12
10
31
30
Wärme-
pumpe
32
22
21
Warm-
wasser
bereitung
24
Nieder-
temperatur
Heizung
20
Absorberkreis
Heizkreis

Fig. 3

11
Speicher
Erdberührendes
Bauteil
13
14
Absorber
Außenbauteil
12
10
31
Wärme-
pumpe
30
32
22
21
Warm-
wasser-
bereitung
24
Nieder-
temperatur
Heizung
20
Absorberkreis
Heizkreis

Fig. 4

11
13
Speicher
Erdbe-
rührendes
Bauteil
14
12
10
Absorber
Außen-
bauteil
31
30
Wärme-
pumpe
32
22
21
24
Warm-
wasser-
bereitung
20
Nieder-
temperatur
Heizung
Absorberkreis
Heizkreis

Fig. 5

11
Speicher
Erdbe-
rührendes
Bauteil
13
14
Absorber
Außen-
bauteil
12
10
Absorberkreis
31
30
Wärme-
pumpe
32
22
21
24
Warm-
wasser-
bereitung
Nieder-
temperatur
Heizung
20
Heizkreis

Fig. 6